# EUROPÄISCHE PATENTSCHRIFT

(11) **EP 3 054 271 B1**
(45) Veröffentlichungstag und Bekanntmachung des Hinweises auf die Patenterteilung: **28.06.2017**
(21) Anmeldenummer: 15153642.2
(22) Anmeldetag: 03.02.2015
(51) Int. Cl.: G01F 23/00, G01F 25/00, G01F 23/26, G01F 23/284, G01F 23/296, G01F 22/00

(54) **Grenzstandschalter mit integriertem Lagesensor**
Limit level switch with integrated position sensor
Détecteur de niveau doté d'un capteur de position intégré

(43) Veröffentlichungstag der Anmeldung: 10.08.2016
(73) Patentinhaber: VEGA Grieshaber KG, 77709 Wolfach (DE)
(72) Erfinder: Weinzierle, Christian, 77709 Wolfach (DE); Welle, Roland, 77756 Hausach (DE)
(74) Vertreter: Maiwald Patentanwalts GmbH

(56) Entgegenhaltungen:
- WO-A1-98/26953
- DE-A1-102012 014 307
- DE-A1-102012 100 936
- FR-A1- 2 907 212
- US-A- 5 619 207

## Beschreibung

### Gebiet der Erfindung

Die Erfindung betrifft die Messung von Grenzständen. Insbesondere betrifft die Erfindung einen Grenzstandschalter mit einem integrierten Lagesensor, ein Verfahren zum Bestimmen eines Grenzstandes eines Füllgutes in einem Behälter mit einem Grenzstandschalter, ein Programmelement und ein computerlesbares Medium.

### Technologischer Hintergrund

In bestimmten Anwendungen ist es wichtig, Grenzstände zu erfassen, um beispielsweise ein Überlaufen oder Leerlaufen des Behälters, in dem ein Füllgut gespeichert ist, zu vermeiden. Beispiele, für die die Erfassung einer vordefinierten Füllhöhe vorteilhaft ist, sind Prozesstanks, Lagertanks, Silos oder Rohrleitungen in der Prozessindustrie. Hierfür werden Grenzstandschalter, die auch als Grenzschalter, Grenzstandmelder oder Grenzstandmessgerät bezeichnet werden können, verwendet. Derartige Vorrichtungen können in unterschiedlichsten Flüssigkeiten sowie granulierten oder pulverförmigen Schüttgütern eingesetzt werden.

Je nach der Eigenschaft des Füllgutes sowie den individuellen Prozessbedingungen kommen unterschiedliche Grenzstandschalter zum Einsatz. Bekannt sind beispielsweise TDR-Melder (TDR: Time Domain Reflectometry), Vibrationsgrenzschalter, sowie Sensoren, die nach dem kapazitiven Messprinzip arbeiten. Ein Schaltbefehl, der vom Grenzstandschalter generiert wird, startet oder stoppt beispielsweise Befülleinrichtungen, wie Förderbänder oder Pumpen.

Das vom Grenzstandschalter erfasste Messsignal ändert sich, je nachdem ob die Messsonde des Grenzstandschalters vom Füllgut umgeben ist oder nicht. Auch kann das Messsignal davon abhängen, ob die Messsonde sauber ist oder ob sich darauf Anhaftungen (Verschmutzungen) befinden. Um das erfasste Messsignal zuverlässig auszuwerten, werden oft aufwändige Auswerteverfahren eingesetzt.

DE 10 2012 100 936 A1 beschreibt ein Verfahren und eine Vorrichtung zur Messung eines Füllstands einer Flüssigkeit in einem Behälter, bei welchem eine Leseeinheit ein Fragesignal an mindestens einen, im Bereich einer Flüssigkeit angeordneten passiven RFID-Transponder aussendet, wobei der passive RFID-Transponder ein Antwortsignal an die Leseeinheit zurücksendet, welches hinsichtlich des Füllstandes ausgewertet wird.

US 5 619 207 A beschreibt ein Positionierungssystem auf Basis von RFID-Technologie.

DE 10 2012 014 307 A1 beschreibt einen Ultraschallölstandsensor für den Motor eines Fahrzeugs in Kombination mit einem Lagesensor, der zur Korrektur des gemessenen Ölstands, welcher aufgrund einer möglichen Schräglage des Fahrzeugs zu korrigieren ist, eingesetzt wird.

### Zusammenfassung der Erfindung

Es ist eine Aufgabe der Erfindung, die Auswertung der von einem Grenzstandschalter erfassten Messsignale zu vereinfachen.

Diese Aufgabe wird durch die Merkmale der unabhängigen Patentansprüche gelöst. Ausführungsformen der Erfindung ergeben sich aus den Unteransprüchen und der folgenden Beschreibung.

Ein erster Aspekt der Erfindung betrifft einen Grenzstandschalter mit einem darin integrierten oder daran angebrachten Lagesensor. Der Lagesensor dient der Erfassung von Informationen über die Einbaulage des Grenzstandschalters in dem Behälter, in dem sich das Füllgut befindet, und der Übermittlung der vom Lagesensor erfassten Informationen über die Einbaulage des Grenzstandschalters an eine Auswerteeinheit des Grenzstandschalters.

Der Grenzstandschalter weist eine Messsonde auf, die zum Detektieren eines die Messsonde umgebenden Füllgutes und zum Erfassen eines mit diesem Zustand korrespondierenden Messsignals ausgeführt ist. Das Füllgut kann die Messsonde beispielsweise ganz, hälftig oder gar nicht bedecken. Diese Zustände der Bedeckung werden vom Grenzstandmelder in ein korrespondierendes Messsignal umgewandelt.

Dieses Messsignal wird durch die Auswerteeinheit (im Folgenden auch als Prozessor bezeichnet) des Grenzstandschalters ausgewertet (analysiert), um zu bestimmen, ob die Messsonde tatsächlich vom Füllgut umgeben ist oder nicht. Beispielsweise kann die Auswerteeinheit ausgeführt sein, zu entscheiden, ob die Messsonde Anhaftungen aufweist, jedoch nicht in das Füllgut eintaucht.

Für diese Auswertung zieht die Auswerteeinheit die von dem Lagesensor erfassten Informationen heran. Hierdurch wird das Auswerteverfahren insgesamt vereinfacht, da der Lagesensor wertvolle Informationen über die Einbaulage (beispielsweise vertikal, nach unten gerichtet; vertikal, nach oben gerichtet; horizontal, seitlich gerichtet) bereitstellen kann, so dass die Auswerteeinheit von vorneherein bestimmte Szenarien ausschließen kann.

So weist beispielsweise ein Messsignal, das von einer vertikal nach oben gerichteten und halb vom Füllgut bedeckten Messsonde erfasst wird, andere Charakteristika auf, als ein Messsignal, das von einer vertikal nach unten gerichteten, halb vom Füllgut bedeckten Messsonde erfasst wurde. Allerdings ist es möglich, dass das Messsignal einer halbbedeckten, vertikal nach oben gerichteten Messsonde ähnliche Charakteristika aufweist, wie das Messsignal einer unbedeckten jedoch verschmutzten, also mit Anhaftungen versehenen Messsonde, welche vertikal nach unten gerichtet ist.

Allein aus den Informationen, ob die Messsonde vertikal nach oben oder nach unten gerichtet ist, kann somit bei einer bestimmten Charakteristik des Messsignals auf eine halbe Bedeckung der Messsonde durch das Füllgut oder auf eine Verschmutzung der Messsonde geschlossen werden.

Gemäß einer Ausführungsform der Erfindung ist die Auswerteeinheit ausgeführt, ein Auswerten des Messsignals anhand der von dem Lagesensor erfassten Informationen zu beurteilen, ob das erfasste Messsignal auf ein Umgeben der Messsonde mit Füllgut oder auf eine Verschmutzung der Messsonde zurückzuführen ist. Um den Auswertealgorithmus zu vereinfachen, wird für diese Beurteilung die vom Lagesensor erfasste Lage des Grenzstandschalters herangezogen. Auf diese Weise können bestimmte Zustände von vornherein ausgeschlossen werden.

Gemäß einer weiteren Ausführungsform der Erfindung betreffen die von dem Lagesensor erfassten Informationen ausschließlich die Orientierung des Grenzstandschalters (bzw. der Messsonde) relativ zum Füllgut.

Gemäß einer weiteren Ausführungsform der Erfindung betreffen die von dem Lagesensor erfassten Informationen sowohl die Orientierung des Grenzstandschalters relativ zum Füllgut als auch die Position des Grenzstandschalters im Behälter.

Die erfassten Informationen bezüglich der Orientierung beschränken sich beispielsweise darauf, ob der Grenzstandschalter vertikal nach oben gerichtet, vertikal nach unten gerichtet oder horizontal in dem Behälter angebracht ist.

Die erfassten Informationen bezüglich der Position des Grenzstandschalters im Behälter beschränken sich beispielsweise auf die Einbauhöhe des Grenzstandschalters im Behälter, sind also eindimensional. Es können aber auch zwei- oder dreidimensionale Positionsinformationen gemessen werden, je nach Ausführung des Lagesensors.

Gemäß einer weiteren Ausführungsform der Erfindung ist der Lagesensor ausgeführt, die Informationen über die Einbaulage des Grenzstandschalters in dem Behälter bei Inbetriebnahme des Grenzstandschalters automatisch zu erfassen und an die Auswerteeinheit zu übermitteln.

Somit kann sich der Benutzer darauf beschränken, den Grenzstandschalter in den Behälter einzubauen und anzuschalten. Eine komplizierte Parametrierung, die eine manuelle Eingabe der Position und die Ausrichtung des Sensors bedingt, kann unterlassen werden. Hiermit wird die Inbetriebnahme des Grenzstandschalters maßgeblich vereinfacht.

Gemäß einer weiteren Ausführungsform der Erfindung handelt es sich bei dem Grenzstandschalter um ein TDR-Grenzstandmessgerät, einen kapazitiven Schalter oder um einen Vibrationsgrenzstandschalter.

Ein weiterer Aspekt der Erfindung betrifft ein Verfahren zum Bestimmen eines Grenzstandes eines Füllgutes in einem Behälter. Zunächst werden ein oder mehrere Messsignale durch eine Messsonde des Grenzstandschalters erfasst. Davor, gleichzeitig oder danach werden Informationen über die Einbaulage des Grenzstandschalters in dem Behälter, in dem sich das Füllgut befindet, durch einen Lagesensor erfasst, der an dem Grenzstandschalter angebracht oder darin integriert ist. Die von der Messsonde und vom Lagesensor erfassten Informationen werden dann an eine Auswerteeinheit des Grenzstandschalters übermittelt und das erfasste Messsignal/die erfassten Messsignale werden unter Berücksichtigung der von dem Lagesensor erfassten Informationen ausgewertet, um zu bestimmen, ob die Messsonde vom Füllgut umgeben ist oder nicht. Auf diese Weise können auch Anhaftungen an der Sonde detektiert werden und das Gerät kann konfiguriert sein, in diesem Fall den Betreiber zu verständigen, damit eine Gerätewartung/Reinigung erfolgen kann.

Gemäß einem weiteren Aspekt der Erfindung ist ein Programmelement angegeben, das, wenn es auf einem Prozessor eines Grenzstandschalters ausgeführt wird, den Grenzstandschalter anleitet, die oben und im Folgenden beschriebenen Verfahrensschritte durchzuführen.

Gemäß einem weiteren Aspekt der Erfindung ist ein computerlesbares Medium angegeben, auf dem ein oben beschriebenes Programmelement gespeichert ist.

Das Programmelement kann z. B. Teil einer Software sein, die auf einem Prozessor des Grenzstandschalters gespeichert ist. Der Prozessor kann aber ebenso Gegenstand der Erfindung sein.

Weiterhin kann vorgesehen sein, dass das Programmelement die Erfindung bereits von Anfang an verwendet oder es kann sich um eine Aktualisierung (Update) handeln, die ein bereits bestehendes Programmelement zur Verwendung der Erfindung veranlasst.

Im Folgenden werden mit Verweis auf die Figuren beispielhafte Ausführungsformen der Erfindung beschrieben.

### Kurze Beschreibung der Figuren

Fig. 1 zeigt vier Grenzstandschalter, die in einem Behälter installiert sind.
Fig. 2 zeigt drei Grenzstandschalter mit Anhaftungen, ebenfalls in einem Behälter installiert.
Fig. 3 zeigt einen Vibrationsgrenzstandschalter gemäß einem Ausführungsbeispiel der Erfindung.
Fig. 4 zeigt einen TDR-Grenzstandschalter gemäß einem Ausführungsbeispiel der Erfindung.
Fig. 5 zeigt drei Messkurven gemäß einem Ausführungsbeispiel der Erfindung.
Fig. 6 zeigt drei weitere Messkurven gemäß einem Ausführungsbeispiel der Erfindung.
Fig. 7 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

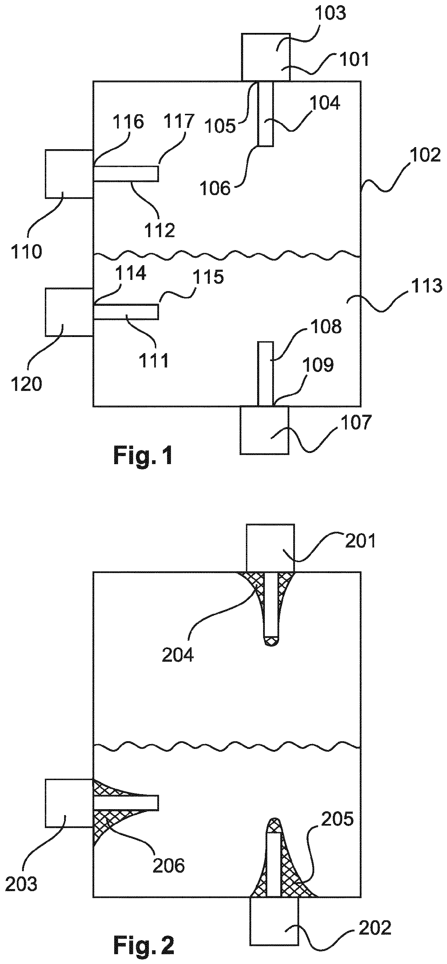

Fig. 1 zeigt einen Behälter 102, in dem vier Grenzstandschalter 101, 107, 110, 120 installiert sind. Der erste Grenzstandschalter 101 ist von oben in den Behälter 102 eingebaut und vertikal nach unten gerichtet. In Industrieanwendungen wird diese Einbaulage häufig zur Überfüllsicherung verwendet. Der Grenzstandschalter 101 arbeitet beispielsweise nach dem Prinzip der Zeitbereichsreflektometrie (TDR) und besteht im Einzelnen aus einer Elektronikeinheit 103 und einem elektrisch leitenden Stab 104.

An der Elektronikeinheit 103 wird ein elektromagnetisches Signal erzeugt und an der Einkoppelstelle 105 auf den Stab 104 (Messsonde) eingekoppelt. Das Signal breitet sich entlang des Stabes 104 geführt aus.

Impedanzsprünge entlang des Stabes 104 haben zur Folge, dass gewisse Teile des hochfrequenten Sendesignals reflektiert werden und als Empfangssignal zur Elektronikeinheit 103 zurücktransportiert werden.

In der Elektronikeinheit werden die empfangenen Reflexionsverhältnisse entlang des Stabes 104 in eine sog. Echokurve umgesetzt und durch Analyse der Echokurve wird eine Grenzstandbewertung durchgeführt.

Je nach Bedeckungsgrad des Stabes 104 ändern sich die Reflexionsverhältnisse und somit auch der Verlauf der Echokurve.

In der oberen Einbaulage beispielsweise wird zuerst das Stabende 106 vom Medium 113 benetzt und anschließend der Stab 104 aufgrund des Befüllungsvorgangs sukzessiv in Richtung Einkoppelstelle 105 bedeckt.

In Fig. 1 ist ein zweiter Grenzstandschalter oder Grenzstandsensor 107 vorgesehen, welcher nach dem Prinzip der Zeitbereichsreflektometrie arbeitet. Dieser Schalter 107 ist von unten in den Behälter 102 eingebaut, also vertikal nach oben gerichtet. Diese Einbaulage wird meistens als Trockenlaufschutz verwendet. Im Vergleich zur oberen Einbaulage wird der Stab 108 des Grenzstandschalters 107 beginnend von der Einkoppelstelle 109 kontinuierlich mit dem Füllgut bedeckt.

Auch die beiden seitlich montierten Grenzstandschalter 110, 120 arbeiten nach dem Messverfahren der Zeitbereichsreflektometrie. Üblicherweise wird die seitliche Montage (hier ist der Grenzstandschalter vertikal zur Seite ausgerichtet) dazu verwendet, einen minimalen bzw. maximalen Füllstand zu bestimmen. Bei dieser Einbauvariante werden die Stäbe 111, 112 horizontal in den Behälter 102 eingebaut. Dies hat zur Folge, dass diese bei einem Befüllvorgang sofort über ihre gesamte Länge hinweg mit dem Füllmedium 113 benetzt werden. Sowohl die Einkoppelstelle 114, 116 als auch die Stabenden 115, 117 werden gleichzeitig bedeckt.

Unabhängig davon in welcher Einbaulage die vier Grenzstandschalter 101, 107, 120, 110 eingebaut werden, wird der Schaltbefehl immer aufgrund der Echokurvenauswertung ausgelöst. Diesbezüglich werden, je nach Anwendung, sehr hohe Anforderungen an die Signalverarbeitung gestellt, um zu jedem Zeitpunkt einen sicheren und zuverlässigen Schaltbefehl ausgeben zu können.

Fig. 2 zeigt den Einsatz von drei Grenzstandschaltern 201, 202, 203, die nach dem Prinzip der Zeitbereichsreflektometrie arbeiten und in ihrer jeweiligen Einbauposition starke Anhaftungen 204, 205, 206 aufweisen. Dies hat zur Folge, dass beispielsweise eine Anhaftung in der oberen Einbaulage nicht von einem Füllstand in der unteren Einbaulage unterschieden werden kann, falls die Einbaulage nicht bekannt ist. Die Auswerteeinheit liefert diesbezüglich keinen zuverlässigen und sicheren Schaltbefehl.

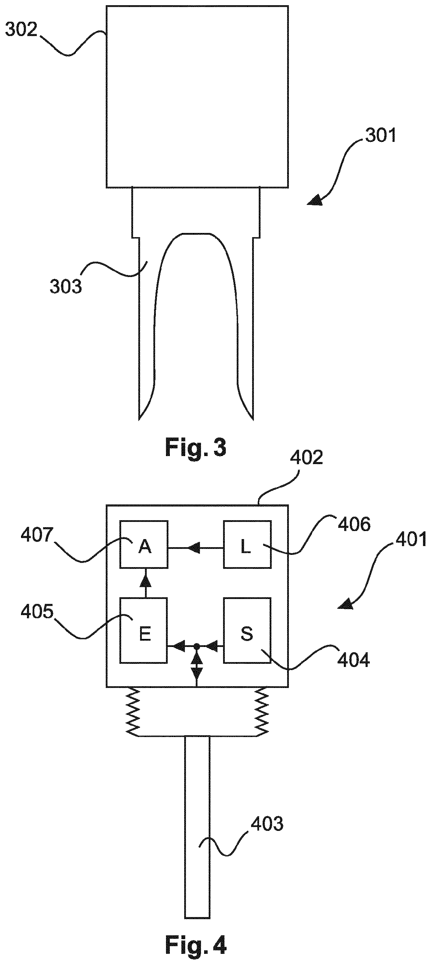

Alternativ zu den in den Figuren 1 und 2 dargestellten TDR-Grenzstandschaltern können auch Vibrationsgrenzstandschalter zum Einsatz kommen. Ein Beispiel hierfür ist in der Fig. 3 gezeigt. Der Grenzstandschalter 301 weist eine Elektronikeinheit 302 und eine schwingungsfähige Gabel 303 auf. Die Gabel 303 wird über die Elektronikeinheit 302 auf ihre mechanische Resonanzfrequenz angeregt. Je nach Bedeckungsvorgang und Bedeckungsgrad der Gabel mit dem Füllmedium ändert bzw. unterscheidet sich deren Resonanzverhalten in der Frequenz sowie in der Amplitude. Da die Vibrationsgrenzstandschalter in der Praxis sowohl oben als auch unten oder seitlich in den Behälter montiert werden, ist auch hier eine verhältnismäßig aufwändige Signalverarbeitung (Messsignalauswertung) notwendig, um eine sichere Grenzstanddetektion zu gewährleisten, insofern die Lage des Vibrationsgrenzschalters nicht bekannt ist. Insbesondere kann es in diesem Fall sehr aufwändig sein, zwischen Anhaftungen (Ablagerungen) auf der Gabel 303 und der Umspülung der Gabel mit einem Füllgut zu unterscheiden.

In den gezeigten Grenzstandschaltern sind Lagesensoren integriert oder daran angebracht.

Fig. 4 zeigt einen entsprechenden TDR-Grenzstandschalter 401 in einem etwas höheren Detailgrad. Der Grenzstandschalter 401 weist eine Elektronikeinheit 402 und einen elektrisch leitenden Stab 403 auf. Innerhalb der Elektronikeinheit 402 befinden sich eine Sendeeinheit 404, eine Empfangseinheit 405 sowie ein Lagesensor 406 und eine Auswerteeinheit 407. Der Lagesensor 406 und die Empfangseinheit 405 liefern der Auswerteeinheit 407 Informationen über die Lage des Sensors bzw. die vom Stab 403 erfassten Messsignale.

In der Sendeeinheit 404 wird ein hochfrequentes Signal erzeugt, welches auf den Stab 403 eingekoppelt wird. Aufgrund von Impedanzsprüngen entlang des Stabes 403 werden gewisse Signalanteile des Sendesignals reflektiert und von der Empfangseinheit 405 empfangen. Die Reflexionsverhältnisse auf dem Wellenleiter 403 werden in der Empfangseinheit 405 in eine sog. Echokurve umgesetzt und der Auswerteeinheit 407 zugeführt. Der Lagesensor 406 liefert der Auswerteeinheit 407 zudem die genaue Einbauposition des Grenzstandmelders 401 und/oder die Orientierung (Lage) des Grenzstandmelders bzw. des Stabes 403 in Bezug auf das Füllgut. Unter Berücksichtigung der Einbaulage kann zum einen eine Anhaftung erkannt und zum anderen der Auswertealgorithmus in seiner Komplexität stark vereinfacht werden.

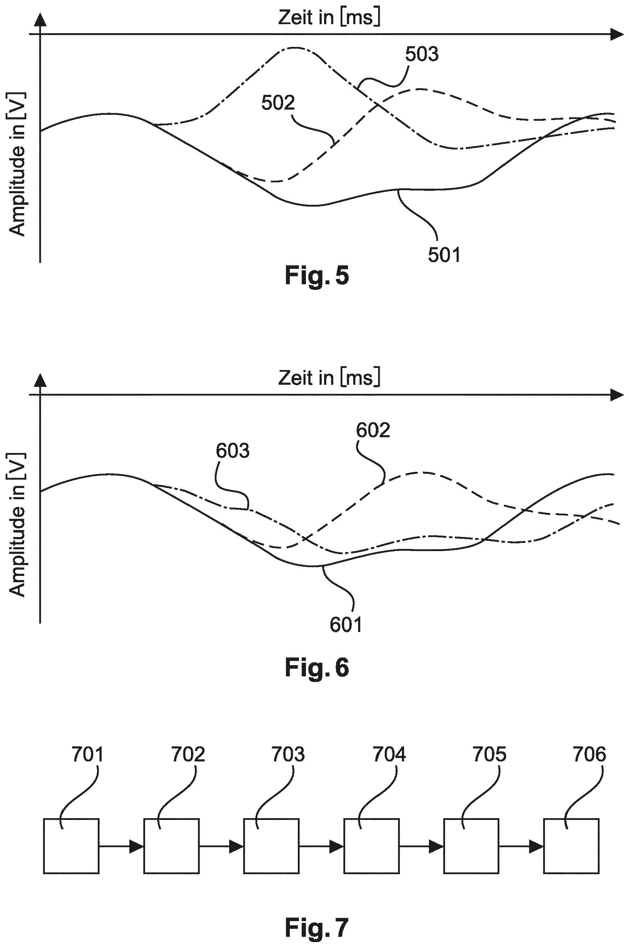

In Fig. 5 sind auszugsweise drei gemessene Echokurven 501, 502, 503 dargestellt, die das Verhalten eines TDR-Grenzstandschalters in der oberen bzw. unteren Einbauposition beschreiben. Die Hochachse gibt die Amplitude des erfassten Messsignals wieder und die horizontale Achse die Zeit, an der das Signal erfasst wurde.

Ohne jegliche Berührung zwischen dem Stab des Grenzstandschalters und dem zu messenden Füllmedium wird die Echokurve 501 gemessen. Die Auswerteeinheit löst in diesem Fall keinen Schaltbefehl aus. Die Form dieser Echokurve 501 hängt von der Geometrie des Grenzstandschalters und insbesondere seiner Messsonde sowie dem darin eingespeisten Messsignal ab.

Ein weiteres Szenario ist durch den Kurvenverlauf 502 charakterisiert. Hier befindet sich der Sensor in der oberen Einbauposition und seine Lage ist vertikal nach unten gerichtet. Der Stab ist bis zur Hälfte mit Wasser bedeckt. Die Auswerteeinheit löst in dieser Situation einen Schaltbefehl aus.

Die Messkurve 503 zeigt die Situation, in der sich der Grenzstandschalter in der unteren Einbauposition befindet und vertikal nach oben gerichtet ist. Auch hier ist der Sensorstab zur Hälfte mit Wasser bedeckt. Auch in diesem Fall löst die Auswerteeinheit einen entsprechenden Schaltbefehl aus.

Da die Auswerteeinheit weiß, welcher Kurvenverlauf in welcher Situation bei welchem Grenzstandschalter zu erwarten ist - bei einem unbedeckten Sensor erwartet sie den Kurvenverlauf 501, bei einem vertikal nach unten gerichteten Sensor in der oberen Einbauposition erwartet sie bei halber Bedeckung durch das Füllgut den Kurvenverlauf 502 und bei einem vertikal nach oben ausgerichteten Sensor, der am Behälterboden installiert ist, erwartet sie bei halber Bedeckung des Sensorstabes durch das Füllgut den Kurvenverlauf 503 -, kann sie schnell entscheiden, ob ein bestimmter Verlauf der Echokurve auf eine Bedeckung des Sensorstabes zurückzuführen ist oder beispielsweise auf eine Verschmutzung. Entsprechend verhält es sich bei Verwendung eines Vibrationsgrenzschalters. In diesem Fall handelt es sich bei dem Messsignalum die Abhängigkeit zwischen Vibrationsanregungsfrequenz und Schwingungsamplitude.

Fig. 5 zeigt, dass das Verhalten bzw. die Form der gemessenen Echokurven sehr stark von der Einbaulage des Grenzstandschalters abhängt und demzufolge die Komplexität der Auswertung der Echokurven erhöht. Ist die Einbaulage des Grenzstandschalters aufgrund eines Lagesensors der Auswerteeinheit bekannt, so kann die Auswertung sehr viel einfacher, sicherer und zuverlässiger durchgeführt werden. Ein weiterer Vorteil der vorliegenden Erfindung liegt darin bekundet, dass eine Anhaftung von einem Füllstand unterschieden werden kann.

In Fig. 6 sind diesbezüglich drei unterschiedliche Echokurven 601, 602, 603 in der oberen Einbaulage (der Grenzstandschalter befindet sich also oben im Behälter und ist vertikal nach unten gerichtet) dargestellt.

Ist der Sensorstab nicht mit dem Füllgut in Berührung, wird die Messkurve 601 gemessen (diese entspricht der Messkurve 501 in Fig. 5). Ist der Stab zur Hälfte mit beispielsweise Honig bedeckt, so ergibt sich die Kurve 602 (entsprechend der Kurven 502 in Fig. 5). Aufgrund von Ablagerungen bzw. Anhaftungen im Bereich der Einkoppelstelle wird die Echokurve 603 aufgenommen. In diesem Fall ist der Stab nicht bedeckt und befindet sich somit oberhalb des Füllgutes. Durch die Kenntnis der Einbaulage kann das Auswerteverfahren demzufolge zwischen einer Anhaftung und einem Füllstand unterscheiden, indem die Form der Echokurve analysiert und mit bekannten und zulässigen Formen verglichen wird.

Die Verwendung eines Lagesensors zur Vereinfachung des Auswerteverfahrens kann nicht nur bei einem Grenzstandschalter, der nach dem Prinzip der Zeitbereichsreflektometrie arbeitet, sinnvoll angewendet werden, sondern auch bei anderen Sensoren, wie beispielsweise Vibrationsgrenzschaltern.

Fig. 7 zeigt ein Flussdiagramm eines Verfahrens gemäß einem Ausführungsbeispiel der Erfindung. In Schritt 701 wird die Lage des Sensors durch einen Lagesensor bestimmt. Gleichzeitig, davor oder danach wird ein Messsignal generiert und in den Sensorstab (die Messsonde) eingeleitet. Die Messsonde gibt in Schritt 702 der Empfangseinheit des Grenzstandschalters ein entsprechendes Messsignal zurück. Das Messsignal und die vom Lagesensor erfasste Information werden in Schritt 703 von der Auswerteeinheit bei der Auswertung des erfassten Messsignals hinzugezogen. In Schritt 704 stellt die Auswerteeinheit beispielsweise fest, dass der Sensor verschmutzt ist und gibt in Schritt 705 eine entsprechende Nachricht ab, die in Schritt 706 dem Benutzer des Grenzstandschalters angezeigt wird.

Das Verfahren kann durch Analyse eines Messsignals zwischen einer Anhaftung und einem Füllstand unterscheiden, indem hierfür die Lage des Grenzstandschalters berücksichtigt wird. Eine grundlegende Idee der Erfindung ist darin zu sehen, dass der Lagesensor in den Grenzstandschalter integriert oder daran angebracht ist. Der Lagesensor hat die Aufgabe, die Montageposition des Grenzstandschalters und dessen Lage im Behälter zu ermitteln. Infolgedessen kann der Auswertealgorithmus bezüglich seiner Komplexität stark vereinfacht werden. Des Weiteren kann unter Berücksichtigung der Einbaulage zwischen einer Anhaftung und einem Füllstand unterschieden werden. Daraus resultiert eine einfachere, sicherere und zuverlässigere Grenzstandbewertung.

## Patentansprüche

1. Grenzstandschalter (101, 201, 301, 401), aufweisend:
eine Messsonde (104, 303, 403) zum Eintauchen in ein Füllgut (113) und zum Erfassen eines mit dem Zustand der Messsonde relativ zum Füllgut korrespondierenden Messsignals (502, 503, 602);
eine Auswerteeinheit (407) zum Auswerten des erfassten Messsignals, um zu bestimmen, ob die Messsonde vom Füllgut umgeben ist oder nicht; **gekennzeichnet durch** einen in dem Grenzstandschalter integrierten Lagesensor (406) zum Erfassen von Informationen über eine Einbaulage des Grenzstandschalters in einem Behälter (102), in dem sich das Füllgut befindet, und zum Übermitteln der erfassten Informationen an die Auswerteeinheit;
wobei die Auswerteeinheit ausgeführt ist, die von dem Lagesensor erfassten Informationen beim Auswerten des Messsignals zu berücksichtigen, und aus den Informationen, ob die Messsonde vertikal nach oben oder nach unten gerichtet ist sowie aus der Form des Messsignals auf eine nur teilweise Bedeckung der Messsonde durch das Füllgut bzw. auf eine Verschmutzung der Messsonde zu schließen.

2. Grenzstandschalter nach Anspruch 1, wobei die von dem Lagesensor (406) erfassten Informationen ausschließlich die Orientierung des Grenzstandschalters (101, 201, 301, 401) relativ zum Füllgut (113) betreffen.

3. Grenzstandschalter nach Anspruch 1, wobei die von dem Lagesensor (406) erfassten Informationen die Orientierung des Grenzstandschalters (101, 201, 301, CGS
401) relativ zum Füllgut (113) und die Position des Grenzstandschalters im Behälter (102) betreffen.

4. Grenzstandschalter nach Anspruch 2 oder 3,
wobei die erfassten Informationen bezüglich der Orientierung des Grenzstandschalters (101, 201, 301, 401) darauf beschränkt sind, anzugeben, ob der Grenzstandschalter vertikal nach oben gerichtet, vertikal nach unten gerichtet oder horizontal in dem Behälter (102) angebracht ist.

5. Grenzstandschalter nach einem der vorhergehenden Ansprüche,
wobei der Lagesensor (406) aufgeführt ist, die Informationen über die Einbaulage des Grenzstandschalters (101, 201, 301, 401) in dem Behälter (102) bei Inbetriebnahme des Grenzstandschalters automatisch zu erfassen.

6. Grenzstandschalter nach einem der vorhergehenden Ansprüche, ausgeführt als TDR Grenzstandmessgerät (401) oder als Vibrationsgrenzstandschalter (101, 102, 301) oder als kapazitiver Grenzstandmelder.

7. Verfahren zum Bestimmen eines Grenzstandes eines Füllgutes (113) in einem Behälter (102) durch einen Grenzstandschalter (101, 201, 301, 401), aufweisend die Schritte:
Erfassen eines Messsignals durch eine Messsonde (104, 303, 403), wobei das Messsignal mit dem Zustand der Messsonde relativ zum Füllgut korrespondiert;
Erfassen von Informationen über eine Einbaulage des Grenzstandschalters in dem Behälter (102), in dem sich das Füllgut befindet, durch einen Lagesensor (406);
Übermitteln der erfassten Informationen an eine Auswerteeinheit (407);
Auswerten des erfassten Messsignals unter Berücksichtigung der von dem Lagesensor erfassten Informationen, um zu bestimmen, ob die Messsonde vom Füllgut umgeben ist oder nicht; Schließen aus den Informationen, ob die Messsonde vertikal nach oben oder nach unten gerichtet ist sowie aus der Form des Messsignals auf eine nur teilweise Bedeckung der Messsonde durch das Füllgut bzw. auf eine Verschmutzung der Messsonde.

8. Programmelement, das, wenn es auf einem Prozessor eines Grenzstandschalters (101, 201, 301, 401) ausgeführt wird, den Grenzstandschalter anleitet, die folgenden Schritte durchzuführen:
Erfassen eines Messsignals durch eine Messsonde (104, 303, 403), wobei das Messsignal mit dem Zustand der Messsonde relativ zum Füllgut korrespondiert;
Erfassen von Informationen über eine Einbaulage des Grenzstandschalters in dem Behälter (102), in dem sich das Füllgut befindet, durch einen Lagesensor (406);
Übermitteln der erfassten Informationen an eine Auswerteeinheit (407);
Auswerten des erfassten Messsignals unter Berücksichtigung der von dem Lagesensor erfassten Informationen, um zu bestimmen, ob die Messsonde vom Füllgut umgeben ist oder nicht; Schließen aus den Informationen, ob die Messsonde vertikal nach oben oder nach unten gerichtet ist sowie aus der Form des Messsignals auf eine nur teilweise Bedeckung der Messsonde durch das Füllgut bzw. auf eine Verschmutzung der Messsonde.

9. Computerlesbares Medium, auf dem ein Programmelement nach Anspruch 8 gespeichert ist.

## Claims

1. Limit level switch (101, 201,301,401), comprising:
a measuring probe (104, 303, 403) for immersion in a filling material (113) and for detecting a measurement signal (502, 503, 602) which corresponds to the state of the measuring probe relative to the filling material;
an evaluation unit (407) for evaluating the detected measurement signal in order to determine whether or not the measuring probe is surrounded by the filling material;
**characterized by**
a position sensor (406) integrated in the limit level switch for detecting information about an installation position of the limit level switch inside a container (102) which contains the filling material, and for transmitting the detected information to the evaluation unit;
wherein the evaluation unit is designed to take the information detected by the position sensor into account when evaluating the measurement signal, and to asses on the basis of the information, whether the measuring probe points vertically upwards or downwards as well as on the basis of the form of the measurement signal to the measuring probe being only partially covered by the filling material or to the measuring probe being dirty.

2. Limit level switch according to claim 1, wherein the information detected by the position sensor (406) only relates to the orientation of the limit level switch (101, 201, 301, 401) relative to the filling material (113).

3. Limit level switch according to claim 1, wherein the information detected by the position sensor (406) relates to both the orientation of the limit level switch (101, 201, 301, 401) relative to the filling material (113) and the position of the limit level switch inside the container (102).

4. Limit level switch according to claim 2 or 3,
wherein the detected information regarding the orientation of the limit level switch (101, 201, 301, 401) is restricted to specifying whether the limit level switch is attached inside the container (102) so as to point vertically upwards, point vertically downwards or is attached horizontally.

5. Limit level switch according to anyone of the preceding claims,
wherein the position sensor (406) is configured to automatically detect the information about the installation position of the limit level switch (101, 201, 301, 401) inside the container (102) when the limit level switch is put into operation.

6. Limit level switch according to anyone of the preceding claims, designed in the form of a TDR limit level measuring device (401) or in the form of a vibration limit level switch (101, 201, 301) or in the form of a capacitive limit level detector.

7. Method for determining a limit level of a filling material (113) in a container (102) by means of a limit level switch (101, 201, 301, 401), comprising the steps of:
detecting a measurement signal by means of a measuring probe (104, 303, 403), wherein the measurement signal corresponds to the state of the measuring probe relative to the filling material;
detecting information about an installation position of the limit level switch inside the container (102), which contains the filling material, by means of a position sensor (406);
transmitting the detected information to an evaluation unit (407);
evaluating the detected measurement signal, taking into account the information detected by the position sensor, in order to determine whether or not the measuring probe is surrounded by the filling material;
assessing on the basis of the information, whether the measuring probe points vertically upwards or downwards as well as on the basis of the form of the measurement signal to the measuring probe being only partially covered by the filling material or to the measuring probe being dirty.

8. Program element which, when executed on a processor of a limit level switch (101, 201, 301, 401), instructs the limit level switch to carry out the following steps:
detecting a measurement signal by means of a measuring probe (104, 303, 403), wherein the measurement signal corresponds to the state of the measuring probe relative to the filling material;
detecting information about an installation position of the limit level switch inside the container (102), which contains the filling material, by means of a position sensor (406);
transmitting the detected information to an evaluation unit (407);
evaluating the detected measurement signal, taking into account the information detected by the position sensor, in order to determine whether or not the measuring probe is surrounded by the filling material;
assessing on the basis of the information, whether the measuring probe points vertically upwards or downwards as well as on the basis of the form of the measurement signal to the measuring probe being only partially covered by the filling material or to the measuring probe being dirty.

9. Computer-readable medium, on which a program element according to claim 8 is stored.

## Revendications

1. Détecteur de niveau (101, 201, 301, 401),
comprenant :
une sonde de mesure (104, 303, 403) pour l'immersion dans une charge (113) et pour la détection d'un signal de mesure (502, 503, 602) correspondant à l'état de la sonde de mesure par rapport à la charge ;
une unité d'évaluation (407) pour évaluer le signal de mesure détecté, et pour déterminer si la sonde de mesure est entourée ou non par la charge ;
**caractérisé par** un
capteur de position (406), intégré dans le détecteur de niveau, pour la détection d'informations sur une position de montage du détecteur de niveau dans un récipient (102), dans lequel se situe la charge, et pour la transmission des informations détectées à l'unité d'évaluation ;
l'unité d'évaluation étant réalisée pour tenir compte, lors de l'évaluation du signal de mesure, des informations détectées par le capteur de position, et pour conclure, à partir des informations selon lesquelles la sonde de mesure est dirigée verticalement vers le haut ou vers le bas, ainsi qu'à partir de la forme du signal de mesure, à un recouvrement seulement partiel de la sonde de mesure par la charge et/ou à un encrassement de la sonde de mesure.

2. Détecteur de niveau selon la revendication 1, dans lequel les informations détectées par le capteur de position (406) concernent exclusivement l'orientation du détecteur de niveau (101, 201, 301, 401) par rapport à la charge (113).

3. Détecteur de niveau selon la revendication 1, dans lequel les informations détectées par le capteur de position (406) concernent l'orientation du détecteur de niveau (101, 201, 301, 401) par rapport à la charge (113) et la position du détecteur de niveau dans le récipient (102).

4. Détecteur de niveau selon la revendication 2 ou 3,
dans lequel les informations détectées relatives à l'orientation du détecteur de niveau (101, 201, 301, 401) se limitent à indiquer si le détecteur de niveau est monté dans le récipient (102) avec une orientation verticale vers le haut, verticale vers le bas ou horizontalement.

5. Détecteur de niveau selon l'une des revendications précédentes,
dans lequel le capteur de position (406) est réalisé pour détecter automatiquement les informations sur la position de montage du détecteur de niveau (101, 201, 301, 401) dans le récipient (102) lors de la mise en service du détecteur de niveau.

6. Détecteur de niveau selon l'une des revendications précédentes, réalisé sous forme d'appareil de mesure de niveau TDR (401) ou sous forme d'interrupteur de niveau limite à vibrations (101, 102, 301) ou sous forme de détecteur de niveau capacitif.

7. Procédé de détermination d'un niveau limite d'une charge (113) dans un récipient (102) par un détecteur de niveau (101, 201, 301, 401), comprenant les étapes de :
détection d'un signal de mesure par une sonde de mesure (104, 303, 403), le signal de mesure correspondant à l'état de la sonde de mesure par rapport à la charge ;
détection d'informations sur une position de montage du détecteur de niveau dans le récipient (102), dans lequel se situe la charge, par un capteur de position (406) ;
transmission des informations détectées à une unité d'évaluation (407) ;
évaluation du signal de mesure détecté compte tenu des informations détectées par le capteur de position, afin de déterminer si la sonde de mesure est entourée ou non par la charge ;
conclusion, à partir des informations selon lesquelles la sonde de mesure est orientée verticalement vers le haut ou vers le bas, ainsi que de la forme du signal de mesure, d'un recouvrement seulement partiel de la sonde de mesure par la charge et/ou d'un encrassement de la sonde de mesure.

8. Elément de programme qui, lorsqu'il est exécuté sur un processeur d'un détecteur de niveau (101, 201, 301, 401), donne l'ordre à ce dernier de mettre en oeuvre les étapes suivantes :
détection d'un signal de mesure par une sonde de mesure (104, 303, 403), le signal de mesure correspondant à l'état de la sonde de mesure par rapport à la charge ;
détection d'informations sur une position de montage du détecteur de niveau dans le récipient (102), dans lequel se situe la charge, par un capteur de position (406) ;
transmission des informations détectées à une unité d'évaluation (407) ;
évaluation du signal de mesure détecté compte tenu des informations détectées par le capteur de position, afin de déterminer si la sonde de mesure est entourée ou non par la charge ;
conclusion, à partir des informations selon lesquelles la sonde de mesure est dirigée verticalement vers le haut ou vers le bas, ainsi qu'à partir de la forme du signal de mesure, d'un recouvrement seulement partiel de la sonde de mesure par la charge et/ou d'un encrassement de la sonde de mesure.

9. Support lisible par ordinateur, sur lequel est enregistré un élément de programme selon la revendication 8.
